# EUROPEAN PATENT APPLICATION

(11) **EP 4 712 061 A1**
(43) Date of publication of application: **18.03.2026**
(21) Application number: 24806720.9
(22) Date of filing: 10.05.2024
(51) Int. Cl.: G09B 9/058, G09B 9/04

(54) **MOTORCYCLE SIMULATOR**

(30) Priority: 12.05.2023 ES 202330834 U
(71) Applicant: Simracing DH, S.L.U., 08760 Martorell (Barcelona) (ES)
(72) Inventor: HIDALGO RAMOS, David, 08760 MARTORELL Barcelona (ES)
(74) Representative: Reich, Jochen
(86) International application number: PCT/ES2024/070288
(87) International publication number: WO 2024/236209

(57) **Abstract**

Motorcycle simulator, consisting of a frame on which a motorcycle fairing is mounted. Said frame includes footrests with the corresponding gear shift pedal and brake pedal, as well as an angularly movable handlebar equipped with a throttle grip, brake lever, and clutch lever.

The frame is rigidly connected to a horizontal and longitudinal profile, which is joined by bearings or bushings to a pair of uprights on which it can tilt, these being associated with a base structure. The horizontal profile is connected, through at least one of its ends, to at least one electric motor controlled by a control circuit.

This control circuit is associated with several sensors, specifically: a throttle grip sensor, brake lever sensor, brake pedal sensor, handlebar sensor, clutch sensor, gear shift pedal sensor, and frame inclination sensor. The control circuit includes means for activating the electric motor based on the parameters obtained from the various sensors.

## Description

### TECHNICAL FIELD

The present invention relates to a motorcycle simulator which, although it is specially designed for simulating the riding of motorcycles belonging to the "MotoGP" and "GP Bikes" categories, is equally applicable to any type of motorcycle.

The purpose of the invention is to provide a device that allows for the most realistic possible simulation of riding this type of vehicle.

### BACKGROUND OF THE INVENTION

In the practical field of application of the invention, although simulators are known in which a motorcycle-shaped shell is connected to a floor-mounted support base by means of one or more arms that tilt laterally against the tension of one or more springs, this type of simulator proves to be rather unrealistic, since it consists of an invariable structure - that is, one in which the tension of the springs remains constant - so that the riding sensations do not vary at any time in response to common driving parameters such as speed, acceleration, handlebar position, etc.

### DESCRIPTION OF THE INVENTION

The proposed motorcycle simulator fully and satisfactorily resolves the aforementioned problems based on a completely novel solution that provides much more realistic riding sensations.

To this end, and according to one of the essential characteristics of the invention, it has been designed starting from a simulated motorcycle shell-specifically, the chassis with the corresponding fairing-and including footrests with the respective gear shift pedal and brake pedal, as well as a movable handlebar equipped with a throttle grip, brake lever, and clutch lever. The invention is characterized by the fact that this entire assembly is articulately connected to a supporting structure at the level of the motorcycle shell itself, unlike conventional designs in which the pivot axis of the assembly is located at floor level.

More specifically, the previously described frame is connected to a longitudinal bar, which in turn is articulately joined at its ends, through the corresponding bearings or bushings, to the upper ends of two uprights forming part of the supporting structure. In correspondence with said horizontal pivot axis, at least one electric motor is provided, by means of which the inclination of the motorcycle frame is regulated, opposing to a greater or lesser extent the inclination that the user attempts to apply to the device, depending on the monitored driving parameters.

In this regard, the device includes an electronic control circuit programmed to analyze a wide variety of driving parameters and, based on them, act on the aforementioned electric motor.

More specifically, the control circuit is associated with a plurality of sensors installed on the throttle grip, brake lever, brake pedal, clutch, gear shift pedal, and handlebar, to identify the relative position of each of these elements.

Additionally, the control circuit incorporates an extra sensor for measuring the inclination of the motorcycle frame.

Based on all these parameters, the microcontroller of the control circuit can automatically calculate the most realistic driving parameters at every moment, controlling not only the inclination of the frame but also the degree of resistance offered by the assembly when the user attempts to change the motorcycle's tilt. This regulation depends on the power delivered by the motor, thereby providing a much more realistic experience than conventional simulators, thanks to the variability in the degree of resistance or tendency of the assembly to alter its inclination according to the driving parameters-something not previously achieved.

In this way, a highly realistic simulator is obtained, ideal for use with large screens and compatible with all types of simulation programs. It can be connected to computers, consoles, and similar devices as an additional peripheral, through the corresponding wired or wireless connection port.

### BRIEF DESCRIPTION OF THE DRAWINGS

To complement the description that follows and in order to facilitate a better understanding of the characteristics of the invention, and according to a preferred practical embodiment thereof, a set of drawings is included as an integral part of this description, in which, for illustrative and non-limiting purposes, the following is represented:
Figure 1. - Shows a perspective view of a motorcycle simulator made in accordance with the object of the present invention, without the fairing, in order to visualize the supporting and tilt-control structure of the device.
Figure 2. - Shows a view of the assembly from the previous figure, in which the frame is inclined in the opposite direction to that shown in Figure 1.

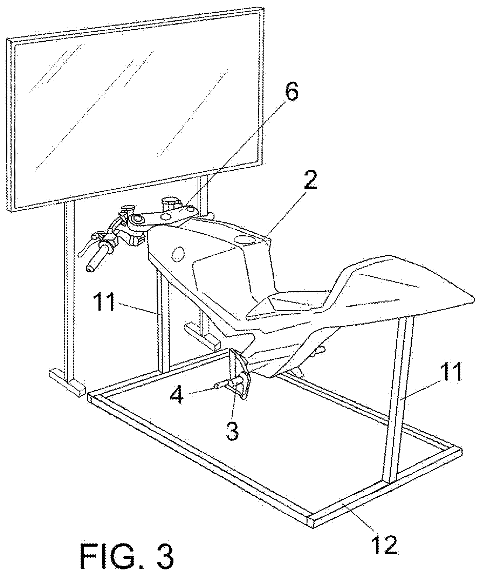

Figure 3. - Shows a perspective view of the fully finished device.

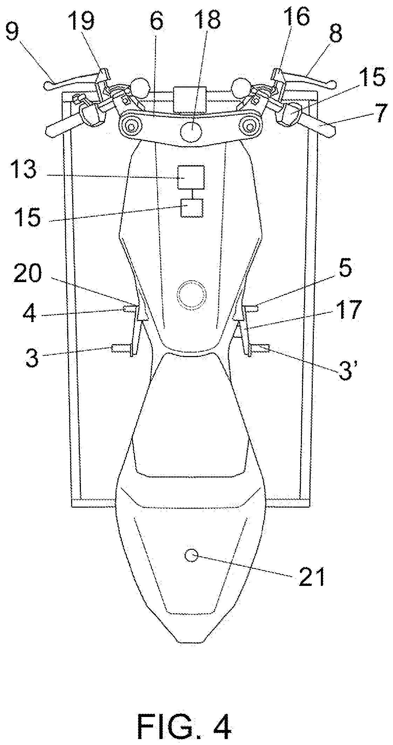

Figure 4. - Shows a top view of the simulator, in which the various sensors involved are represented.
Figure 5. - Finally, shows an electrical diagram of the device of the invention.

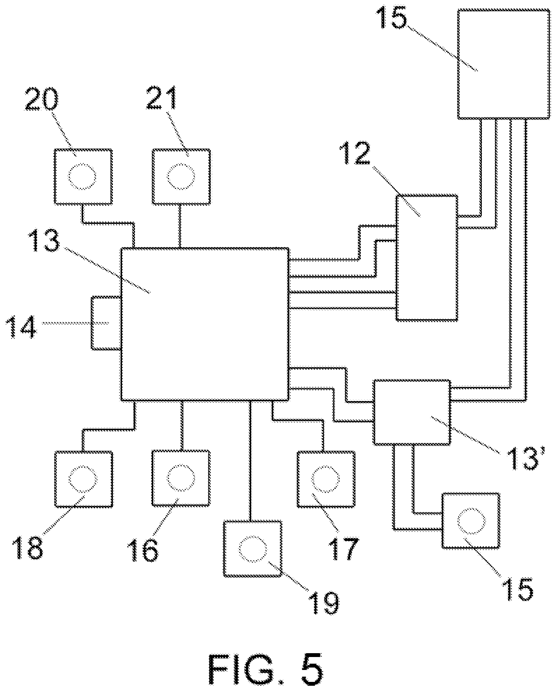

Figure 5. - Finally, shows an electrical diagram of the device of the invention.

### PREFERRED EMBODIMENT OF THE INVENTION

In view of the figures referenced, it can be observed that the simulator of the invention is formed from a frame (1) on which a motorcycle fairing (2) is mounted. Said frame includes footrests (3) with the corresponding gear shift pedal (4) and brake pedal (5), as well as an angularly movable handlebar (6) provided with its corresponding throttle grip (7), brake lever (8), and clutch lever (9).

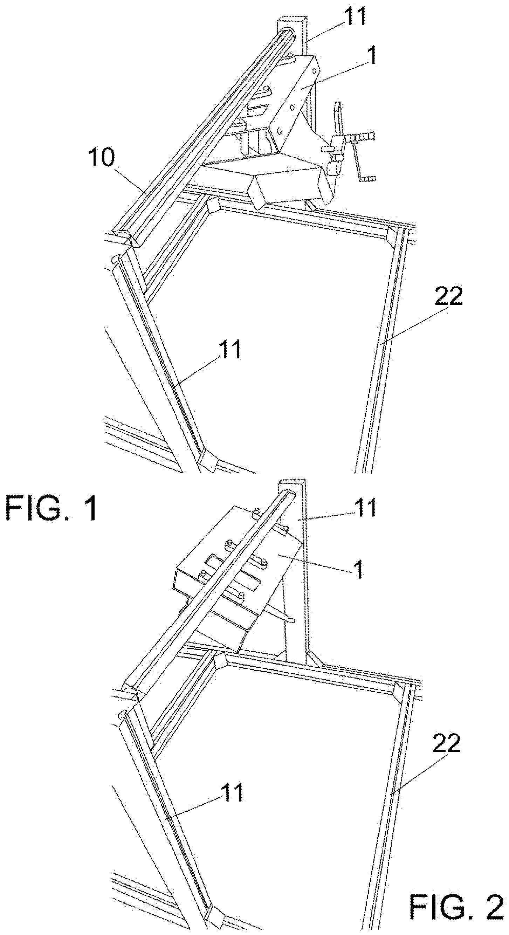

The frame (1) is rigidly connected to a horizontal profile (10), preferably made of aluminum, which extends longitudinally along the assembly, as shown in detail in Figures 1 and 2. This profile is connected by means of bearings or bushings to a pair of uprights (11) on which it can tilt, as depicted in the aforementioned figures, and which rest on a base structure (22), also made of aluminum.

This horizontal profile is connected, through at least one of its ends, to an electric motor (12), which regulates the inclination of the motorcycle frame (1), opposing or assisting the tilt applied by the user to a greater or lesser extent, depending on the monitored driving parameters.

To achieve this, the device incorporates an electronic control circuit, shown in Figure 6, which includes a controller (13-13') properly programmed and featuring a connection port (14)-either wired or wireless-powered through a corresponding power supply (15). Associated with this controller are the following sensors:
- (15) Position sensor of the throttle grip (7).
- (16) Activation sensor of the brake lever (8).
- (17) Pressure sensor of the brake pedal (5).
- (18) Angular position sensor of the handlebar (6).
- (19) Activation sensor of the clutch (9).
- (20) Positioning sensor of the gear shift pedal (4).
- (21) Inclination sensor of the frame (1).

Thus, based on the parameters monitored by these sensors, the microcontroller of the control circuit can automatically calculate the most realistic driving parameters at every moment, controlling not only the inclination of the frame-through actuation of the motor (12)-but also the degree of resistance of the assembly when the user attempts to change the motorcycle's tilt, depending on the power delivered by said motor.

## Claims

1. Motorcycle simulator, **characterized in that** it is composed of a frame (1) on which a motorcycle fairing (2) is mounted, said frame including footrests (3) with the corresponding gear shift pedal (4) and brake pedal (5), as well as an angularly movable handlebar (6) provided with a throttle grip (7), brake lever (8), and clutch lever (9). The frame (1) is rigidly connected to a horizontal and longitudinal profile (10), which is connected by means of bearings or bushings to a pair of uprights (11) on which it can tilt, said uprights being associated with a base structure (22).
The horizontal profile (10) is connected, through at least one of its ends, to at least one electric motor (12), the operation of which is controlled by a control circuit. Said control circuit is associated with: a position sensor (15) for the throttle grip (7), an activation sensor (16) for the brake lever (8), a pressure sensor (17) for the brake pedal (5), an angular position sensor (18) for the handlebar (6), an activation sensor (19) for the clutch (9), a positioning sensor (20) for the gear shift pedal (4), and an inclination sensor (21) for the frame (1).
Furthermore, the control circuit includes means for activating the electric motor (12) based on the parameters obtained from the different sensors.

2. Motorcycle simulator according to claim 1, **characterized in that** the electronic control circuit comprises a controller (13-13') that includes a connection port (14), either wired or wireless, said circuit being electrically powered through a power supply (15).
